# EUROPEAN PATENT APPLICATION

(11) **EP 4 825 647 A1**
(43) Date of publication of application: **21.10.2026**
(21) Application number: 25882883.9
(22) Date of filing: 01.10.2025
(51) Int. Cl.: B60L 53/65, B60L 53/62, B60L 53/80, B60L 53/30, B60L 53/68, H02J 7/02, H02J 7/00

(54) **INTEGRATED CHARGING DEVICE AND CONTROL METHOD OF INTEGRATED CHARGING DEVICE**

(30) Priority: 21.10.2024 KR 20240143787
(71) Applicant: LG Energy Solution, Ltd., Seoul 07335 (KR)
(72) Inventor: KWON, Seong Hyun, Daejeon 34122 (KR)
(74) Representative: BCKIP Part mbB
(86) International application number: PCT/KR2025/015610
(87) International publication number: WO 2026/089343

(57) **Abstract**

An integrated charging device according to an embodiment of the present invention is connectable to an alternating current (AC) grid and comprises: one or more battery packs; a converter that converts power supplied from the AC grid into direct current (DC) power and supplies the DC power; a user interface unit that receives a charging request of a user and transmits the charging request to a charging management unit; and the charging management unit that determines whether the charging request of the user is a charging request using a facility charging method or a charging request using a battery exchange method, determines a state of the one or more battery packs according to the charging request, and controls at least some of one or more chargers or the one or more battery packs connected to the integrated charging device, wherein the integrated charging device is provided to be movable and portable when disconnected from the AC grid.

## Description

### [Technical Field]

This application claims priority to and the benefit of Korean Patent Application No. 10-2024-0143787 filed in the Korean Intellectual Property Office on October 21, 2024, the entire contents of which are incorporated herein by reference.

The present disclosure relates to an integrated charging apparatus and a control method thereof, and more particularly, to an integrated charging apparatus for providing charging service for electric vehicles using station-based charging and electric vehicles using battery swap-based charging, and a control method thereof.

### [Background Art]

Recently, electric vehicles are emerging as the most effective solution to reduce greenhouse gas emissions and improve energy efficiency and thus, consumer interest and demand for electric vehicles is growing. Unlike conventional internal combustion engine vehicles, electric vehicles (EVs) require components such as batteries, electric motors, inverters, converters, and battery management systems (BMSs).

The electric vehicles generally use rechargeable secondary batteries. The secondary batteries, capable of recharging and reuse, are manufactured as battery modules or packs by electrically connecting multiple battery cells based on the required output capacity, serving as power sources for diverse applications. The secondary batteries are used in small, high-tech electronic devices like smart phones, as well as a variety of fields including electric bicycles, electric vehicles, and energy storage systems (ESS).

A prerequisite for the widespread adoption of electric vehicles is the establishment of a charging infrastructure, including EV charging stations. The EV charging stations typically draw power directly from the power grid to charge electric vehicles. Meanwhile, battery-powered vehicles may require battery swapping (primarily for two-wheeled electric vehicles). While battery swapping infrastructure for these electric vehicles (typically two-wheeled vehicles, electric bikes) using battery-swapping type charging is currently being developed, the battery swapping infrastructure is often built separately from the station-based charging infrastructure due to constraints such as limited space in urban areas.

Thus, an effective charging infrastructure is needed that comprehensively supports both four-wheeled electric vehicles using station-based charging and two-wheeled electric vehicles using battery swapping type charging.

### [Detailed Description of the Invention]

### [Technical Problem]

To obviate one or more problems of the related art, embodiments of the present disclosure provide an integrated charging apparatus capable of servicing both electric vehicles using station-based charging and electric vehicles using battery swap-based charging.

To obviate one or more problems of the related art, embodiments of the present disclosure also provide a control method for the integrated charging apparatus.

### [Technical Solution]

In order to achieve the objective of the present disclosure, an integrated charging apparatus, capable of being coupled to an Alternating Current (AC) grid, may include one or more battery packs; a converter configured to convert power supplied from the AC grid into Direct Current (DC) power to supply power; a user interface configured to receive a charging request of a user and transmit the charging request to a charging controller; and a charging controller configured to determine whether the charging request of the user is a charging request using a station-based charging or a charging request using a battery swap-based charging, determine a state of the one or more battery packs according to the charging request, and control one or more chargers or at least some of the one or more battery packs connected to the integrated charging apparatus, wherein the integrated charging apparatus is provided in a mobile form which is movable when disengaged from the AC grid.

The one or more battery packs may include one or more first battery packs which are mounted in a receiving portion including a locking device configured to perform locking or unlocking under the control of the charging controller.

The charging controller may further be configured to, in response to a battery swapping type charging request, determine whether any one of the first battery packs is fully charged, provide corresponding information to the user, and unlock a selected pack.

The one or more first battery packs may be provided in a portable form, when separated from the receiving portion.

The charging controller may further be configured to, upon detecting a discharged battery pack inserted into the receiving portion where the one or more first battery packs are received, control the converter to charge a corresponding discharged battery pack.

The one or more battery packs may further include one or more second battery packs which are fixedly installed inside the integrated charging apparatus.

The charging controller may further be configured to, in response to a charging request of station-based charging, determine whether the charging request is a pack-based charging request or a time-based charging request and control one or more available second battery packs or the converter to charge the corresponding electric vehicle.

The charging controller may further be configured to, in response to a pack-based charging request, supply power stored in a selected second battery pack through a charger connected to a corresponding electric vehicle.

The charging controller may further be configured to charges one or more first and second battery packs in an idle state, using power supplied from the AC grid.

Meanwhile, the integrated charging apparatus may further include a movement assisting device for assisting the movement of the integrated charging apparatus when the integrated charging apparatus is disengaged from the AC grid and moved.

The integrated charging apparatus may be a tower capable of being installed in a limited space.

The integrated charging apparatus may communicate with an integrated server that manages location information of one or more integrated charging apparatuses and information and charge state of the battery packs included in each integrated charging apparatus.

According to another embodiment of the present disclosure, a control method for an integrated charging apparatus, including one or more battery packs and capable of being coupled to an Alternating Current (AC) grid, may include determining whether a charging request of a user is a charging request using a station-based charging or a charging request using a battery swap-based charging; determining a state of the one or more battery packs according to the charging request; and controlling one or more chargers or at least some of the one or more battery packs connected to the integrated charging apparatus, wherein the integrated charging apparatus is provided in a mobile form which is movable when disengaged from the AC grid.

The one or more battery packs may include one or more first battery packs which are mounted in a receiving portion including a locking device configured to perform locking or unlocking under the control of the charging controller.

The controlling of the one or more chargers or the at least some of the one or more battery packs may include, in response to a battery swapping type charging request, determining whether any one of the first battery packs is fully charged, providing corresponding information to the user, and unlocking a selected pack.

The controlling of the one or more chargers or the at least some of the one or more battery packs may include, in response to a charging request of station-based charging, determining whether the charging request is a pack-based charging request or a time-based charging request and controlling one or more available second battery packs or a converter to charge a corresponding electric vehicle.

Meanwhile, the method may further include charging the one or more first battery packs and one or more second battery packs in an idle state, using power supplied from the AC grid.

The method may further include, upon detecting a discharged battery pack inserted into a receiving portion where the one or more first battery packs are received, controlling a converter to charge a corresponding discharged battery pack.

In addition, the method may further include, upon receiving a device information request from an integrated server communicating with the integrated charging apparatus via a network, reporting location information of the integrated charging apparatus and information on a status and charge state of the one or more battery packs to the integrated server.

### [Advantageous Effects]

The integrated charging apparatus according to embodiments of the present disclosure can charge both electric vehicles using station-based charging and electric vehicles using battery swap-based charging.

Furthermore, the apparatus according to present disclosure is installed as a compact, roadside charging station, thereby minimizing space occupied and enabling efficient space creation and infrastructure construction in urban areas.

### [Brief Description of the Drawings]

FIG. 1 is a conceptual diagram of a general infrastructure of electric vehicle charging.
FIG. 2 is a diagram illustrating the configuration of an on/off-board charging system for an electric vehicle.
FIG. 3 is a block diagram of an integrated charging apparatus according to embodiments of the present disclosure.
FIG. 4 is a conceptual diagram of an integrated charging service providing system according to embodiments of the present disclosure.
FIG. 5 is a schematic flowchart illustrating a control method for an integrated charging apparatus according to embodiments of the present disclosure.
FIG. 6 is a detailed flowchart illustrating a control method for an integrated charging apparatus according to embodiments of the present disclosure when station-based charging is requested.
FIG. 7 is a detailed flowchart illustrating a control method for an integrated charging apparatus according to embodiments of the present disclosure when battery swap-based charging is requested.

- 100:: integrated charging apparatus
- 110/120:: Battery pack
- 130:: charging controller
- 140:: AC/DC converter
- 200:: EV charger (EVC)
- 300:: AC grid
- 400:: integrated server
- 500:: electric vehicle (EV)

### [Best Modes for Practicing the Disclosure]

The present disclosure may be modified in various forms and have various embodiments, and specific embodiments thereof are shown by way of example in the drawings and will be described in detail below. It should be understood, however, that there is no intent to limit the present disclosure to the specific embodiments, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein are for the purpose of describing specific embodiments only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store energy and a battery pack refers to an assembly in which a plurality of battery cells is electrically connected.

An "electric vehicle using station-based charging" may refer to an electric vehicle that charges its battery pack (or module) installed in the vehicle using a charger in charging infrastructure. The station-based charging for these electric vehicles may include both direct charging, which supplies Alternating Current (AC) or Direct Current (DC) energy by plugging in the vehicle, and non-contact charging using high-frequency waves. The electric vehicles using station-based charging may include mainly four-wheeled electric vehicles, including for example, hybrid electric vehicles (HEVs), plug-in hybrid vehicles (PHEVs), electric vehicles (EVs), and fuel cell electric vehicles (FCEVs).

Battery-swappable electric vehicles may utilize removable battery packs. When charging is required, a fully charged battery pack (or module) may be mounted and used, by swapping batteries at a battery swapping station operated by a charging infrastructure operator. Battery-swappable electric vehicles primarily include two-wheeled electric vehicles, including for example, e-bikes and electric scooters.

Hereinafter, exemplary embodiments of the present invention will be described in detail with reference to the accompanying drawings.

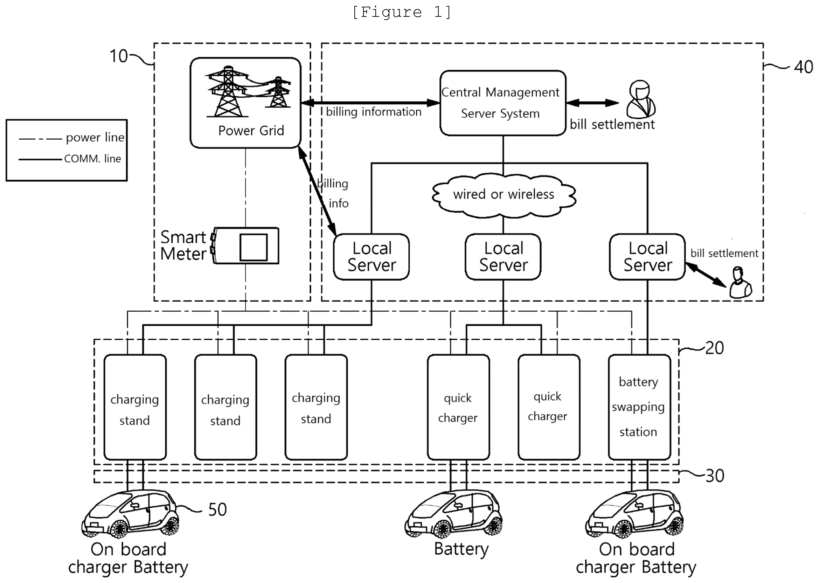

FIG. 1 is a conceptual diagram of a general infrastructure of electric vehicle charging.

Electric vehicle charging infrastructure is a system that facilitates inexpensive and convenient charging of electric vehicles in apartment complexes or public parking lots, which is an incorporated term for all hardware and software related to charging electric vehicle batteries. Referring to FIG. 1, the charging infrastructure may generally include a power supply facility 10, a charger 20, a charging interface 30, and an information system 40.

The power supply facility 10 is the electrical equipment used to supply power to the charger, which may include transmission and distribution infrastructure, a power meter, wiring, a distribution panel, and a circuit breaker. The charger 20 is a facility which, equipped with a user interface, receives power, and supplies AC or DC electricity to the electric vehicle.

Meanwhile, EV charging methods may be broadly categorized into direct charging, non-contact charging, and battery swapping. Here, the direct charging involves connecting a plug to an electric vehicle to supply AC or DC energy. In a battery swapping method, batteries may be automatically exchanged at a battery exchange station in a way that the charging infrastructure operator purchases batteries and leases them to users, or the business operator operates the business directly. Non-contact charging involves transmitting power from a transmitting pad, which is a high-frequency power supply device, usually embedded in the parking lot floor, to a receiving pad installed on the electric vehicle via magnetic induction/resonance to charge the battery.

The chargers 20 utilizing direct charging may be categorized as on-board chargers and off-board chargers, depending on whether the chargers are installed in the electric vehicle. They may also be categorized as home, standard, and quick chargers based on their intended use. On-board chargers, installed inside the electric vehicle, offer the advantage of charging anywhere there's a power source. However, weight and installation space of the on-board chargers limit their power capacity. Off-board chargers, on the other hand, have no restrictions on power capacity or installation space.

The quick chargers convert grid AC power to DC or DC/DC convert renewable energy DC power to supply necessary power to the vehicle's battery, in which the rectifier and DC/DC converter are separately installed in the external charging system, resulting in fast charging speed. Slow chargers (charging stands in FIG. 1) may require a power conversion process because the rectifier and DC/DC converter are built into the vehicle (onboard charger) and vehicles are structurally limited to small-capacity conversion, resulting in slower charging speed.

Meanwhile, the charging interface 30 is a device that supports power supply and communication to the electric vehicle, including a cable, plug, and wireless transmission/reception pads, connecting the charger to the electric vehicle. Here, the plug is a charging connector inserted into the charging socket of a charging station, also known as an infrastructure charging plug. The connector is also known as a vehicle charging connector, inserted into the electric vehicle's charging inlet. The electric vehicle inlet is the charging socket of the electric vehicle into which the vehicle charging connector is inserted, also known as a vehicle charging inlet.

Furthermore, the charging infrastructure information system 40 may be an information system that provides users with information on the type, state, location, and use of chargers, and performs the overall operation and management of the charging infrastructure, such as operation control of chargers, user management, information provision, billing, and payment. The charging infrastructure information system 40 may include a central management server located on a wired or wireless network and one or more local servers.

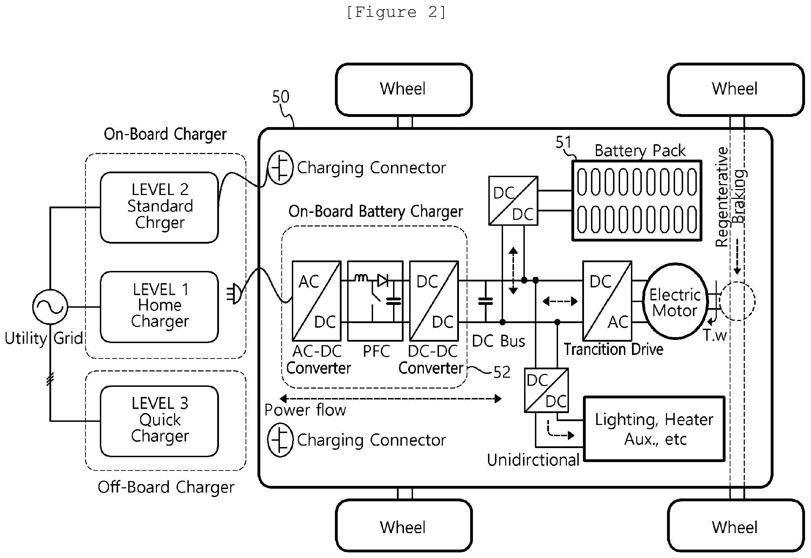

FIG. 2 is a diagram illustrating the configuration of an on/off-board charging system for an electric vehicle.

Electric vehicles may be categorized into Hybrid Electric Vehicles (HEVs), Plug-in Hybrid Vehicles (PHEVs), Electric Vehicles (EVs), and Fuel Cell Electric Vehicles (FCEVs) based on the type of power and battery used.

Hybrid Electric Vehicles (HEVs) may be a general term for vehicles that use dual power sources, typically using both a conventional engine and a battery. Plug-in Hybrid Vehicles (PHEVs) differ from HEVs in that their batteries are externally charged, and the battery plays a primary role in both starting and driving, with the engine only playing a supporting role when the battery is discharged. Electric Vehicles (EVs) are a form of PHEV that enhances battery capacity and eliminates the engine. Fuel Cell Electric Vehicles (FCEVs) may be characterized by their primary power source being a fuel cell that generates its own electric energy, rather than an externally charged battery.

Batteries used in electric vehicles 50 must satisfy the following requirements: high energy density for increased vehicle driving range and the ability to be fully discharged a certain number of times. Nickel-metal hydride (Ni-MH) batteries and lithium polymer batteries, which possess sufficient power density and reasonable charge/discharge energy efficiency, are primarily used as batteries for electric vehicles. Batteries are typically installed in vehicles in the form of a battery pack 51 that includes one or more battery modules and a Battery Management System (BMS).

The BMS may manage driving range prediction, charging, overcharge prevention, and cell-to-cell equalization algorithms. The BMS may also include functions for managing battery cell or module failures and providing battery replacement notifications through battery life prediction. To perform these functions, the BMS may include various components, such as fuses, current sensing elements, thermistors, switches, and balancers, to monitor the current, voltage, and temperature of the battery cells or modules.

The battery pack 51 may supply power to the electric motor through an inverter (or AC/DC converter) installed in the vehicle, thereby powering the vehicle. The BMS of the battery pack may communicate with the ECU and VCU in the vehicle using communication methods such as the CAN protocol. The BMS may report battery state information to the vehicle and control the connection between the vehicle and the battery based on vehicle operation information. When the vehicle is stopped, the BMS may receive a vehicle operation shutdown signal from the vehicle's ECU or VCU and may stop the power supply from the battery module to the vehicle.

For such operation of the vehicle, control operations such as motor drive control, regenerative braking control, air conditioning load control, and electrical load power (12V) supply control may be required. A vehicle may include a plurality of electronic control units (ECUs) to perform these control operations. Among these ECUs, the top-level controller responsible for overall vehicle operation and control may be called the vehicle control unit (VCU).

Meanwhile, multiple ECUs within a vehicle can communicate with each other via the Controller Area Network (CAN) bus. CAN is a standard communications protocol designed to allow microcontrollers and other devices to communicate with each other within a vehicle without a host computer. CAN is a non-host bus-type message-based network protocol primarily used for communication between controllers and is primarily used in vehicles.

Referring to Fig. 2, chargers are classified into on-board chargers and off-board chargers depending on whether they are installed in an electric vehicle, and are further categorized into home, standard, and quick chargers depending on their intended use. On-board chargers may include standard chargers and home chargers. Quick chargers may be off-board chargers with a power level of 50 [kW] or higher and are primarily used to supplement power shortages for short period of time at electric vehicle charging stations.

Referring to Fig. 2, an on-board charger 52 installed inside an electric vehicle may include an AC/DC converter, a power flow controller (PFC), and a DC/DC converter, capable of converting AC power supplied from a grid or a corresponding power supply device into DC power of an appropriate level and outputting it. The onboard charger 52 may supply power by connecting to a DC/DC converter connected to the battery pack via a DC bus, an AC/DC converter connected to the electric motor, and a DC/DC converter connected to the electrical components.

The charging method for electric vehicles, illustrated in FIG. 2, utilizes a charging facility. Meanwhile, electric vehicles may include not only four-wheeled vehicles but also two-wheeled electric vehicles (e.g., e-bikes). Two-wheeled electric vehicles typically use a battery swap-based charging method. As previously discussed, battery swap-based charging method involves exchanging its used and discharged battery with a fully charged battery pack (or module) at a battery swap station operated by a charging infrastructure operator, installing and using the new fully charged battery pack in the vehicle.

While infrastructure for electric vehicles (typically two-wheeled vehicles and e-bikes) using battery swapping is currently being deployed, charging places for battery swapping are currently being built separately from station-based charging infrastructure due to constraints such as limited space in urban areas. In other words, a charging system that comprehensively supports both four-wheeled electric vehicles using station-based charging and two-wheeled vehicles using swap-based charging is currently lacking.

In order to solve these problems, the present disclosure is presented to provide an integrated charging apparatus (so-called urban Electric Vehicle & Bike Charging Station (EVBCS) tower) capable of simultaneously supporting electric vehicles using a station-based charging method and electric vehicles using a battery swap-based charging method.

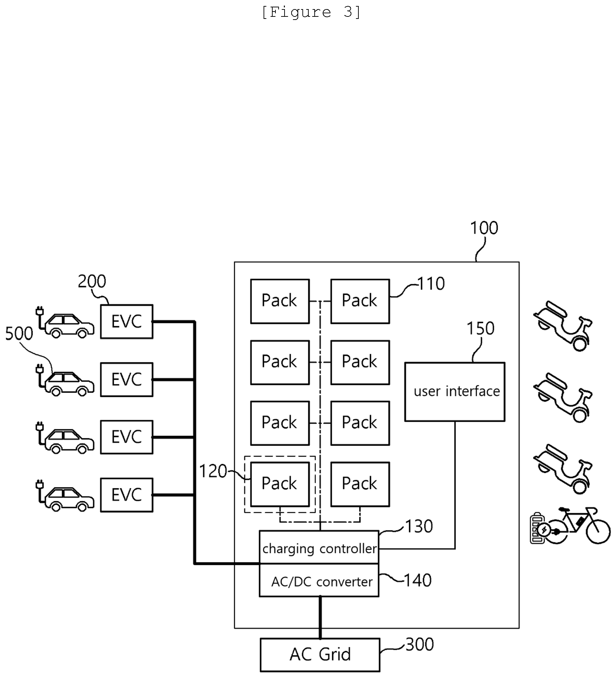

FIG. 3 is a block diagram of an integrated charging apparatus according to embodiments of the present disclosure.

The integrated charging apparatus 100 according to embodiments of the present disclosure may be an integrated charging apparatus that can be connected to an Alternating Current (AC) grid and may be provided as a tower that can be installed even in limited spaces, such as on sidewalks or in front of buildings in urban areas.

Referring to FIG. 3, the integrated charging apparatus 100 according to embodiments of the present disclosure may include a converter 140 configured to convert power supplied from an AC grid 300 into DC power and supply the converted power; one or more battery packs 110, 120; a user interface 150 configured to receive a user's charging request and transmit the request to a charging controller; and a charging controller 130 configured to determine whether the charging request is a charging request using a station-based charging method or a battery swapping method; determine the state of the one or more battery packs according to the charging request; and control one or more chargers or at least some of the one or more battery packs connected to the integrated charging apparatus.

Here, the integrated charging apparatus according to embodiments of the present disclosure may be provided in a portable/mobile form that can be moved when disconnected from the AC grid. Accordingly, the integrated charging apparatus according to embodiments of the present disclosure may further include a movement assisting device to assist the movement of the integrated charging apparatus when disengaged from the AC grid and moved. Here, the movement assisting device may include, for example, wheels, rails, or other means attached to the bottom, side, or top of the integrated charging apparatus. In addition, the integrated charging apparatus may further include a locking device (e.g., a means including a lock) necessary when fixedly installed in a single location.

In the example of FIG. 3, the charging controller 130 and the AC/DC converter 140 are configured as separate devices and may operate in interaction with each other. The charging controller 130 and the AC/DC converter 140 may also be integrated into a single piece of hardware.

In the example of FIG. 3, the charging controller 130 and AC/DC converter 140 of the integrated charging apparatus 100 may be connected to one or more chargers 200 that perform charging for an electric vehicle. One or more chargers may be connected to the integrated charging apparatus 100 when service is required, and may be disconnected from the integrated charging apparatus 100 when movement of the integrated charging apparatus 100 is required. The one or more chargers 200 may be installed in locations that can be connected to a vehicle's charging connector, such as, for example, a shoulder of a city road or a sidewalk adjacent to a road. The one or more chargers 200 may include a user interface for verifying user authentication information, displaying a user's charging request and charging-related information.

Meanwhile, the one or more battery packs may include one or more first battery packs 110 mounted in a receiving portion that includes a locking device that locks or unlocks under the control of the charging controller.

Each of the first battery packs may be mounted in a separate receiving compartment, each including a locking device that locks or unlocks under the control of the charging controller. Here, one or more first battery packs may be separated from the receiving compartment and provided in a portable form. When the charging controller 130 detects a discharged battery pack inserted into the receiving compartment housing the first battery pack, the charging controller 130 may control the converter 140 to charge the corresponding battery pack.

The integrated charging apparatus 100 may further include one or more second battery packs 120 fixedly installed within the integrated charging apparatus. The charging controller 130 may charge one or more first battery packs 110 and second battery packs 120 in an idle state using power supplied from the AC grid. The power stored in the second battery pack 120 is intended to respond to a charging request from an electric vehicle charging using a charging device (e.g., a charger 200). As will be discussed later, the charging controller 130 may pre-charge the second battery pack 120 and, when the user requests charging per pack, supply the power stored in the second battery pack via a charger connected to the electric vehicle.

Here, one or more of the first battery packs 110 and the second battery pack 120 may be a collection of multiple battery cells electrically connected. A battery management system (BMS) may be installed in each battery pack 110, 120, which monitors the current, voltage, and temperature of the corresponding battery pack and controls charging and discharging based on the monitoring results.

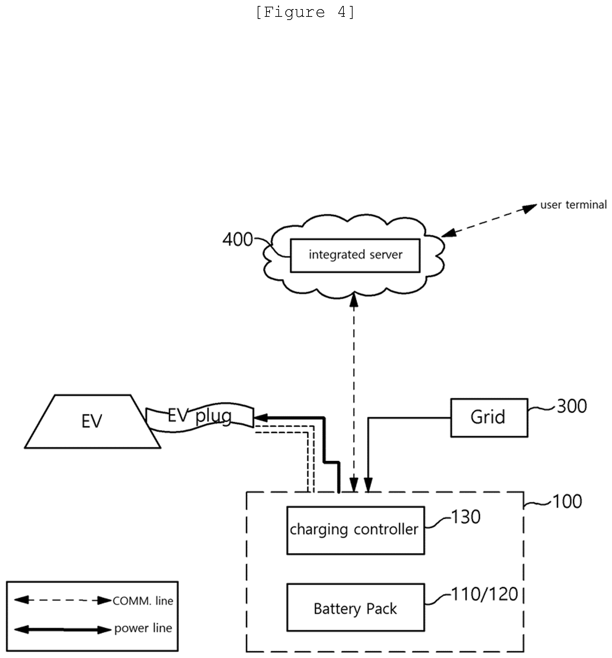

FIG. 4 is a conceptual diagram of an integrated charging service providing system according to embodiments of the present disclosure.

The integrated charging service providing system according to embodiments of the present disclosure may include an integrated charging apparatus 100 provided in a mobile form, as illustrated in FIG. 3, and an integrated server 400 located on a network.

The integrated charging apparatus is capable of being coupled to an AC grid 300 and may include one or more battery packs 110, 120 and a charging controller 130. More specifically, the charging controller 130 may determine whether a user's charging request is a charging request using a station-based charging or a battery swap-based charging, determine the state of one or more first battery packs based on the charging request, and control one or more chargers connected to a converter or the first battery pack.

The integrated charging apparatus 100 may further include a converter that converts power supplied from the AC grid into DC power and supplies the DC power, a user interface unit that receives user requests and transmits them to the charging controller, and a communication module.

Meanwhile, the integrated server 400 may provide an integrated charging service according to embodiments of the present disclosure by interfacing with one or more integrated charging apparatuses 100. More specifically, the integrated server 400 may receive, store, and manage location information of one or more integrated charging apparatuses 100 installed at an actual site (i.e., connected to the AC grid and providing charging services) as well as information such as the status and charge state of the battery packs held by each integrated charging apparatus 100.

A user may utilize the integrated charging service according to embodiments of the present disclosure using a terminal capable of communicating with the integrated server 400 via a network. More specifically, a user may utilize the charging service described in FIG. 3 through the integrated charging apparatus 100, and may also be provided with information about the locations and related information of one or more integrated charging apparatuses 100 using the information provided by the integrated server 400.

More specifically, in response to a charging device information request received from a user terminal over the network, the integrated server 400 may provide the user terminal with the location and related information of an integrated charging apparatus containing one or more battery packs usable for charging. Here, the user's request for charging device information may be received through a user interface of the integrated charging apparatus deployed on the site.

According to an embodiment, if the user requests charging from the first integrated charging apparatus but the first integrated charging apparatus cannot provide a charging service corresponding to the user's request, the first integrated charging apparatus may report this to the integrated server 400. Upon the report, the integrated server 400 may provide information about a second integrated charging apparatus located closest to the first integrated charging apparatus among the integrated charging apparatuses capable of providing the charging service corresponding to the user's request, to the first integrated charging apparatus or the user's terminal.

The user may also be provided with information about the charging process and charging progress (when using a facility (station-based) charging service), as well as information about the payment amount after charging completion, through the user interface of the integrated charging apparatus or the user terminal.

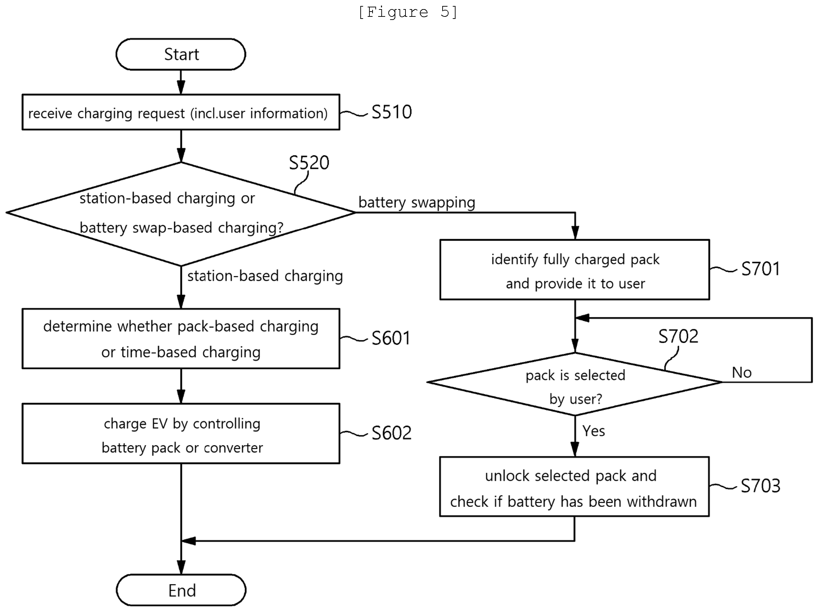

FIG. 5 is a schematic flowchart illustrating a control method for an integrated charging apparatus according to embodiments of the present disclosure.

Referring to FIG. 5, the integrated charging apparatus may receive a charging request including user information (S510). The charging request may be received through the user interface 150 included in the integrated charging apparatus 100 or through a user interface provided by one or more chargers 200 connected to the integrated charging apparatus 100. The charging request may be implemented in the form of a charging request including a user card issued in advance to the user or user information entered after scanning a barcode provided through the user interface, or the like. Here, the user information may be replaced with credit card information, etc., provided later via a payment means for the charging.

Upon receiving a charging request, the integrated charging apparatus may determine whether the request is a charging request using the station-based charging method or the battery swapping method (S520). Depending on the result of the determination, the state of one or more first battery packs may be identified and one or more chargers or first battery packs connected to the converter may be controlled.

More specifically, if the user's charging request is for station-based charging, an additional check is performed to determine whether the request is for pack-based charging or time-based charging (S601). If the request is for pack-based charging, a battery pack (e.g., a second battery pack) is controlled to charge the electric vehicle. If the request is for time-based charging, the AC/DC converter is controlled to charge the electric vehicle (S602).

Meanwhile, if the user's charging request is for battery swapping, a fully charged pack (among the first battery packs) is determined and displayed to the user (S701). If the user selects the pack (S702), the selected pack may be unlocked and it is checked if the battery has been withdrawn (S703).

Additionally, although not illustrated, the control method for an integrated charging apparatus according to embodiments of the present disclosure may further include a step of charging one or more battery packs in an idle state using power supplied from the AC grid.

The control method for an integrated charging apparatus according to embodiments of the present disclosure may further include a step of controlling the converter to charge a corresponding battery pack when a discharged battery pack inserted into a receiving compartment where the first battery pack is received is detected.

The method for controlling an integrated charging apparatus according to embodiments of the present disclosure may further include, when receiving a device information request from an integrated server that is linked to the integrated charging apparatus through a network, reporting location information of the integrated charging apparatus and information on the status and charge state of one or more battery packs to the integrated server.

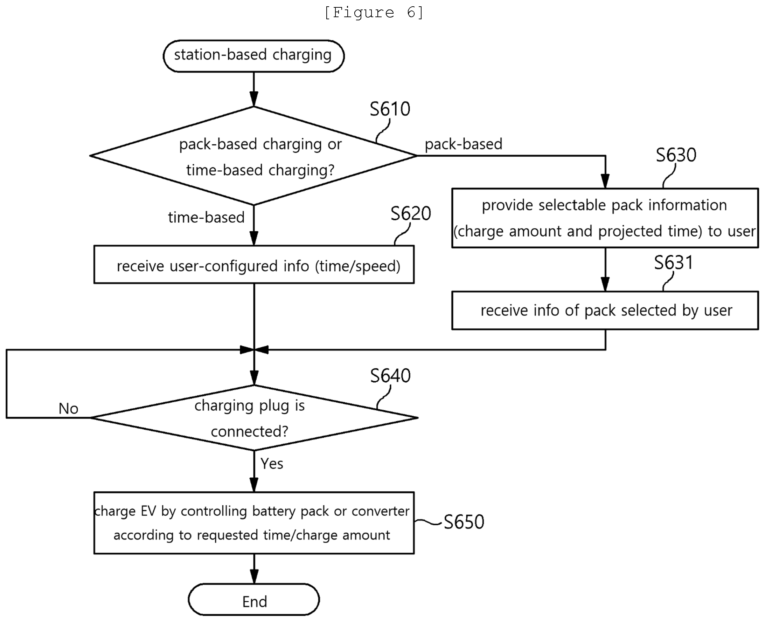

FIG. 6 is a detailed flowchart illustrating a control method for an integrated charging apparatus according to embodiments of the present disclosure when station-based charging is requested.

Referring to FIG. 6, if the user's charging request is a station-based charging method, as discussed previously in FIG. 5, an additional check is performed to determine whether the request is a pack-based charging request or a time-based charging request (S610). If the user's charging request is a time-based charging request, user-configured information (e.g., charging time, charging speed, charge amount, etc.) is received via the user interface (S620). Upon confirming the user-configured information related to the charging request, it is checked if the charging plug is connected (S640) and the converter is controlled according to the requested charging time and speed to charge the electric vehicle (S650).

Meanwhile, if the user's charging request is a pack-based charging request, the remaining capacity (SOC: State of Charge) of the fixed battery pack (e.g., the second battery pack in FIG. 3) is checked to see if it is sufficiently available for charging, and information on the selectable packs (including the charge amount and the expected time) is provided to the user (S630). Upon receiving the information on the pack selected by the user (S631), it is checked if the charging plug is connected (S640) and the corresponding battery pack is controlled according to the requested amount of charge to perform charging for the corresponding electric vehicle (S650).

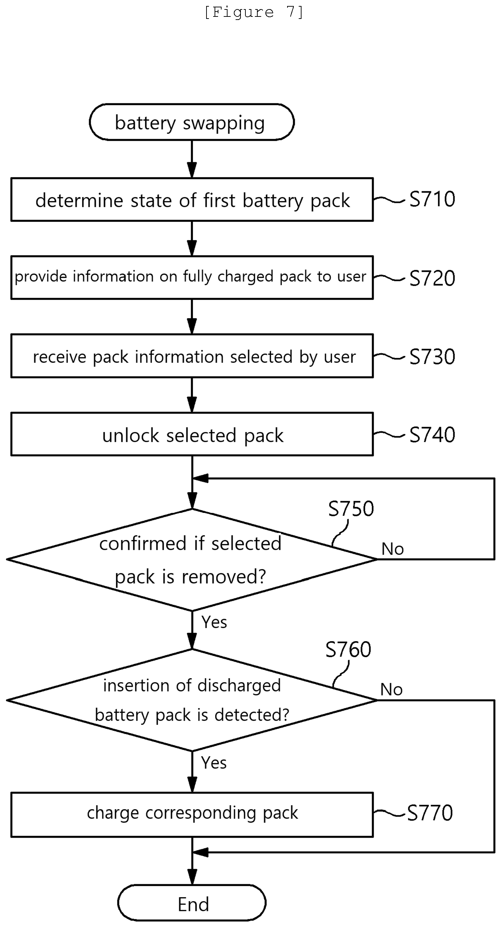

FIG. 7 is a detailed flowchart illustrating a control method for an integrated charging apparatus according to embodiments of the present disclosure when battery swap-based charging is requested.

Referring to FIG. 7, if a user requests charging using a battery swapping method, the integrated charging apparatus may determine the state of the first battery pack, which can be removed from the battery compartment (S710), determine if there is a fully charged pack, and provide the corresponding information to the user (S720). Upon receiving information about the pack selected by the user (S730), the integrated charging apparatus may unlock the selected pack (S740).

It is then checked whether the unlocked pack has been removed (S750) and whether a new battery pack has been inserted into the space of the removed pack (S760). The battery pack newly accommodated in the battery compartment may be a battery pack that has been discharged due to use and requires charging, and may be inserted by the user who requested the battery swapping. If the integrated charging apparatus confirms that a discharged battery pack has been inserted (Yes in S760), the integrated charging apparatus may charge the corresponding pack (S770).

The integrated charging apparatus according to embodiments of the present invention described above can simultaneously charge both electric vehicles using station-based charging and electric vehicles using battery swapping method. Furthermore, since the integrated charging apparatus is installed as a compact, roadside charging station, occupation space can be minimized, enabling efficient space creation and infrastructure construction in urban areas.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the foregoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An integrated charging apparatus capable of being coupled to an Alternating Current (AC) grid, the integrated charging apparatus comprising:
one or more battery packs;
a converter configured to convert power supplied from the AC grid into Direct Current (DC) power to supply power;
a user interface configured to receive a charging request of a user and transmit the charging request to a charging controller; and
a charging controller configured to:
determine whether the charging request of the user is a charging request using a station-based charging or a charging request using a battery swap-based charging;
determine a state of the one or more battery packs according to the charging request; and
control one or more chargers or at least some of the one or more battery packs connected to the integrated charging apparatus,
wherein the integrated charging apparatus is provided in a mobile form which is movable when disengaged from the AC grid.

2. The integrated charging apparatus of claim 1, wherein the one or more battery packs include:
one or more first battery packs which are mounted in a receiving portion including a locking device configured to perform locking or unlocking under the control of the charging controller.

3. The integrated charging apparatus of claim 2, wherein the charging controller is configured to:
in response to a battery swapping type charging request, determine whether any one of the first battery packs is fully charged, provide corresponding information to the user, and unlock a selected pack.

4. The integrated charging apparatus of claim 2, wherein the one or more first battery packs are provided in a portable form, when separated from the receiving portion.

5. The integrated charging apparatus of claim 2, wherein the charging controller is further configured to:
upon detecting a discharged battery pack inserted into the receiving portion where the one or more first battery packs are received, control the converter to charge a corresponding discharged battery pack.

6. The integrated charging apparatus of claim 2, wherein the one or more battery packs further include one or more second battery packs which are fixedly installed inside the integrated charging apparatus.

7. The integrated charging apparatus of claim 6, wherein the charging controller is further configured to:
in response to a charging request of station-based charging, determine whether the charging request is a pack-based charging request or a time-based charging request and control one or more available second battery packs or the converter to charge a corresponding electric vehicle.

8. The integrated charging apparatus of claim 7, wherein the charging controller is further configured to:
in response to a pack-based charging request, supply power stored in a selected second battery pack through a charger connected to the corresponding electric vehicle.

9. The integrated charging apparatus of claim 6, wherein the charging controller is further configured to:
charge one or more first and second battery packs in an idle state, using power supplied from the AC grid.

10. The integrated charging apparatus of claim 1, further comprising a movement assisting device configured to assist a movement of the integrated charging apparatus when the integrated charging apparatus is disengaged from the AC grid and moved.

11. The integrated charging apparatus of claim 1, wherein the integrated charging apparatus is or includes a tower capable of being installed in a limited space.

12. The integrated charging apparatus of claim 1, wherein the integrated charging apparatus communicates with an integrated server that manages location information of one or more integrated charging apparatuses and information and charge state of the battery packs included in each integrated charging apparatus.

13. A control method for an integrated charging apparatus including one or more battery packs and capable of being coupled to an Alternating Current (AC) grid, the control method comprising:
determining whether a charging request of a user is a charging request using a station-based charging or a charging request using a battery swap-based charging;
determining a state of the one or more battery packs according to the charging request; and
controlling one or more chargers or at least some of the one or more battery packs connected to the integrated charging apparatus,
wherein the integrated charging apparatus is provided in a mobile form which is movable when disengaged from the AC grid.

14. The control method of claim 13, wherein the one or more battery packs include:
one or more first battery packs which are mounted in a receiving portion including a locking device configured to perform locking or unlocking under the control of the charging controller.

15. The control method of claim 14, wherein the controlling of the one or more chargers or the at least some of the one or more battery packs includes:
in response to a battery swapping type charging request, determining whether any one of the first battery packs is fully charged,
providing corresponding information to the user, and
unlocking a selected pack.

16. The control method of claim 14, wherein the controlling of the one or more chargers or the at least some of the one or more battery packs includes:
in response to a charging request of station-based charging, determining whether the charging request is a pack-based charging request or a time-based charging request and controlling one or more available second battery packs or a converter to charge a corresponding electric vehicle.

17. The control method of claim 14, further comprising:
charging the one or more first battery packs and one or more second battery packs in an idle state, using power supplied from the AC grid.

18. The control method of claim 14, further comprising:
upon detecting a discharged battery pack inserted into a receiving portion where the one or more first battery packs are received, controlling a converter to charge a corresponding discharged battery pack.

19. The control method of claim 13, further comprising:
upon receiving a device information request from an integrated server communicating with the integrated charging apparatus via a network,
reporting location information of the integrated charging apparatus and information on a status and charge state of the one or more battery packs to the integrated server.
